# EUROPEAN PATENT APPLICATION

(11) **EP 4 606 559 A1**
(43) Date of publication of application: **27.08.2025**
(21) Application number: 25155228.7
(22) Date of filing: 31.01.2025
(51) Int. Cl.: B29C 64/106, B29C 64/393, B28B 1/00, B29C 64/194, B29C 64/227, E04G 21/04, B33Y 10/00, B33Y 30/00, B33Y 80/00

(54) **ADDITIVE MANUFACTURING METHOD, THREE-DIMENSIONAL OBJECT OBTAINED THEREFROM, AND ADDITIVE MANUFACTURING SYSTEM**

(30) Priority: 22.02.2024 FI 20245221
(71) Applicant: Hyperion Robotics Oy, 02630 Espoo (FI)
(72) Inventor: Unterreiner, Henry, 02630 Espoo (FI); Mohite, Ashish, 02630 Espoo (FI)
(74) Representative: TBK

(57) **Abstract**

An additive manufacturing method for controlling an additive manufacturing system for manufacturing a three-dimensional object from a curable first material according to a three-dimensional data model, the additive manufacturing system, and a three-dimensional object are provided. The nozzle of the additive manufacturing system is moved such that a shortest distance (d23) between a second section (U2) of a target trajectory (T) and a third section (U3) of the target trajectory is less than a thickness (t1) of a first segment (S1) discharged in a first section (U1) of the target trajectory. At least one of a magnitude of a second movement speed, with which the nozzle is moved in the second section, and a magnitude of a third movement speed, with which the nozzle is moved in the third section, is higher than a magnitude of a first movement speed, with which the nozzle is moved in the first section. Alternatively or in addition thereto, at least one of a second discharge rate, with which the first material is discharged from the nozzle in the second section, and a third discharge rate, with which the first material is discharged from the nozzle in the third section, is lower than a first discharge rate, with which the first material is discharged from the nozzle in the first section.

## Description

### Field

The present disclosure relates to an additive manufacturing method, an additive manufacturing system, and a three-dimensional object obtained by executing the additive manufacturing method.

### Background

Additive manufacturing, also referred to as "AM", is the construction of a three-dimensional object according to a three-dimensional data model, also referred to as "3D model" or "CAD model". The basis of AM is layer-by-layer sequential massing, by which a material is deposited to form the three-dimensional object. Conventionally, AM is used for precise reproduction of a digital model designated for manufacturing, so amount and distribution of mass directly correspond to their digital counterparts.

However, AM technology implies that massing can be affected by how the material depositing device moves and how fast and where it discharges the material. The slower the material depositing device moves and discharges - the more matter it deposits, the faster - the less.

EP 3 587 077 A1 relates to an additive manufacturing system and a method where a speed at which material is passed to a head is controlled based on marks on the material surface.

US 10 350 821 B2 relates to a method for manufacturing a three-dimensional object by additive manufacturing where a relative movement between a substrate and a dispensing head is effected such that the dispensing head moves along a non-linear path.

However, conventionally, the path along which a material depositing device moves, has a predetermined distance from itself. By maintaining said predetermined distance of the toolpath from itself, excessive accumulation of the material in a locally concentrated area is prevented. However, maintaining said predetermined distance of the toolpath from itself creates specific requirements to the routing of the toolpath, which thereby restricts the freedom of design and decreases the efficiency of the additive manufacturing.

Therefore, it is an object of the present disclosure to efficiently and precisely manufacture a three-dimensional object by additive manufacturing, while allowing the toolpath of the material depositing device to be close to itself.

### Summary

The above object is solved by an additive manufacturing method according to claim 1.

The additive manufacturing method controls an additive manufacturing system for manufacturing a three-dimensional object from a curable first material according to a three-dimensional data model.

The curable first material may be a liquid or a high-viscose material that can be cured, hardened or set hard so as to form the three-dimensional object. Specifically, the curable first material may be a molten polymer material. The curable first material may also be a dispersion, in which particles of one or more solid materials are dispersed in a liquid or a high-viscose material.

The additive manufacturing system comprises a base for supporting the three-dimensional object thereon, a nozzle for discharging the first material, a moving mechanism configured to cause a relative movement between the base and the nozzle, and a controller configured to control the moving mechanism.

The base is a structure that supports the three-dimensional object thereon, such as a work surface, a pallet, a factory floor, a place of an end consumer, a construction site or the like.

The nozzle is a device, through which the first material is discharged and supplied towards the base. The nozzle is configured to set and control discharge characteristics of the first material, such as a discharge rate of the first material. The nozzle may have a predetermined opening area, through which the first material is discharged. The nozzle may be connected to a reservoir of the first material to ensure continuous supply of the first material when manufacturing the three-dimensional object. The nozzle may also be the nozzle of an extruder that melts a polymer material into a liquid or a high-viscose state by applying heat thereto, so as to set and control the discharge rate from the nozzle.

The moving mechanism causes a relative movement between the base and the nozzle by moving the base with respect to the nozzle and/or moving the nozzle with respect to the base. Specifically, the moving mechanism may be an industrial robot that has a manipulator arm, on which the nozzle is placed, and is capable of moving on three or more axes with respect to the base.

However, the moving mechanism is not limited to an industrial robot, and can also be a multi-axis positioning system, such as a three-axis positioning system that moves along an X-, Y-, and Z-axis, while the nozzle is placed in a fixed position. Furthermore, the moving mechanism may be a combined positioning system, in which the nozzle is moved along an X-, and Y-axis while the base is moved along the vertical direction (Z-axis), for example.

The controller is a commonly known microcomputer and may include a CPU, a RAM, a ROM, an input/output interface, and the like, and is configured to control the moving mechanism by transmitting respective output signals to servomotors, stepper motors, actuators or the like of the moving mechanism so as to cause the relative movement.

When the moving mechanism causes the relative movement, the nozzle follows a target trajectory. The target trajectory is a toolpath, along which a center of the nozzle moves relative to the base. The target trajectory represents a three-dimensional curve that is generated on the basis of the three-dimensional data model, such as the CAD model of the three-dimensional object.

The target trajectory includes a plurality of sections that are located in multiple vertically consecutive layers. Each section represents a part of the target trajectory, and may have a specific length along the target trajectory.

A specific layer of the multiple vertically consecutive layers may be identified by referring to a k^{th} layer, wherein "k" is a natural number, such that a k+1^{th} layer represents a layer that is immediately adjacent to the k^{th} layer in the vertical direction, a k+2^{th} layer represents a layer that is the next but one layer with respect to the k^{th} layer in the vertical direction, and so forth.

While following the target trajectory, a plurality of segments of the first material are discharged from the nozzle. Each of the segments is formed from the first material and occupies a volume in the three-dimensional space. Each segment has a thickness in a direction perpendicular to the target trajectory and within a respective layer, a height in a vertical direction, and a length along the target trajectory. All segments together form the three-dimensional object. A centerline of each of the segments coincides and aligns with a part of the target trajectory. Particularly, each centerline of the segments coincides and aligns with a respective section of the plurality of sections of the target trajectory.

The discharging from the nozzle in a specific section is controlled by setting a movement speed of the nozzle and/or a discharge rate of the nozzle in that specific section. The expression "and/or" means in this context that only the movement speed of the nozzle may be controlled, only the discharge rate of the nozzle may be controlled, or both may be controlled in conjunction while moving in a specific section. The movement speed of the nozzle is defined as a change of position of the nozzle along the target trajectory with respect to time. Specifically, a magnitude of the movement speed corresponds to a scalar, and may be specified in the distance travelled per time, such as meters per second [m/s], for example. The discharge rate of the first material is defined as an amount (such as a volume or a mass) of the first material that is discharged from the nozzle with respect to time. Specifically, the discharge rate of the first material may be specified in liters per minute [l/min] or grams per second [g/s], for example.

Specifically, a relatively high thickness of a segment is obtained by setting a relatively low movement speed and/or a relatively high discharge rate. Vice versa, a relatively low thickness of the segment is obtained by setting a relatively high movement speed and/or a relatively low discharge rate. Particularly, the movement speed and/or the discharge rate may be set on the basis of the discharge characteristics of the first material (such as the viscosity of the first material), thereby taking into account that a relatively low-viscous material flows apart easily after discharging and causes a relatively high thickness of the segment and a relatively low height thereof, and vice versa.

The magnitude of the movement speed does not have to be constant along an entire section. Specifically, a speed profile may be applied in a section, and the movement speed may vary (increase and/or decrease) while moving along said section. At each point of the target trajectory, a corresponding movement speed may be specified. Similarly, the discharge rate does not have to be constant along an entire section. Specifically, a discharge profile may be applied in a section, and the discharge rate may vary (increase and/or decrease) while moving along said section. At each point of the target trajectory, a corresponding discharge rate may be specified.

The additive manufacturing method comprises a first discharging step of moving the nozzle by the moving mechanism with a first movement speed in a first section of the target trajectory within a k^{th} layer of the multiple vertically consecutive layers, while discharging a first segment of the first material with a first discharge rate from the nozzle.

In the first discharging step, the first movement speed and/or the first discharge rate is set such that the first segment has a thickness in a direction perpendicular to the target trajectory and within the k^{th} layer.

The additive manufacturing method further comprises a second discharging step of moving the nozzle by the moving mechanism with a second movement speed in a second section of the target trajectory within the k^{th} layer, while discharging a second segment of the first material with a second discharge rate from the nozzle. The second section is continuous to the first section along the target trajectory, such that the second discharging step is executed before or after the first discharging step. In the second discharging step, the second movement speed and/or the second discharge rate may be set such that the second segment has a thickness in a direction perpendicular to the target trajectory and within the k^{th} layer that is substantially equal to the thickness of the first segment.

The additive manufacturing method further comprises a third discharging step of moving the nozzle by the moving mechanism with a third movement speed in a third section of the target trajectory within the k^{th} layer, while discharging a third segment of the first material with a third discharge rate from the nozzle. The third section may be continuous to the second section along the target trajectory, such that the third discharging step is executed before or after the second discharging step. However, also other steps may be executed between the second and third discharging step. In the third discharging step, the third movement speed and/or the third discharge rate may be set such that the third segment has a thickness in a direction perpendicular to the target trajectory and within the k^{th} layer that is substantially equal to the thickness of the first segment.

In the third discharging step, the nozzle is moved such that the third section is close to the second section and a shortest distance between the second section and the third section within the k^{th} layer is less than the thickness of the first segment. At least one of a magnitude of the second movement speed and a magnitude of the third movement speed is set to be higher than a magnitude of the first movement speed and/or at least one of the second discharge rate and the third discharge rate is set to be lower than the first discharge rate.

Accordingly, by setting at least one of a magnitude of the second movement speed and a magnitude of the third movement speed appropriately, excessive discharge of the first material is prevented in an area, where the third section is close to the second section and a shortest distance between the second section and the third section is less than the thickness of the first segment. Thereby, structural inaccuracies, in which the shape of the three-dimensional object deviates from that of the three-dimensional data model, are prevented. The same effect is achieved by setting at least one of the second discharge rate and the third discharge rate appropriately.

Preferably, each of the first discharge rate, the second discharge rate, and the third discharge rate is greater than zero, and each of the magnitude of the first movement speed, the magnitude of the second movement speed, and the magnitude of the third movement speed is greater than zero.

Accordingly, the excessive discharge of the first material is prevented in the area, where the third section is close to the second section, without stopping the discharging from the nozzle and without stopping the movement of the moving mechanism. Thereby, the three-dimensional object can be manufactured quickly and efficiently. Furthermore, the three-dimensional object can be manufactured even with a first material, whose discharge characteristics prevent the discharging from the nozzle to be easily and precisely stopped.

Preferably, the third section intersects the second section such that the shortest distance between the second section and the third section is zero, thereby forming an intersection portion between the second segment and the third segment within the k^{th} layer.

Accordingly, the second and third segment can form the intersection portion, which structurally interconnects the second and third segments within the k^{th} layer. Thereby, a three-dimensional object, which has a reinforcing structure such as a stiffener portion or a reinforcing rib, can be manufactured.

Preferably, the additive manufacturing method further comprises a fourth discharging step of moving the nozzle by the moving mechanism with a fourth movement speed in a fourth section of the target trajectory within the k^{th} layer, while discharging a fourth segment of the first material with a fourth discharge rate from the nozzle. The fourth section is continuous to the third section along the target trajectory and a movement direction of the nozzle is reversed in the fourth section. That is, a subsequent movement direction of the nozzle in the fourth section is changed so as to be opposite to a previous movement direction of the nozzle in the fourth section. The reversing of the movement direction may be performed in one reversing point, such that a subsequently-followed part of the fourth section coincides and vertically overlaps with a previously-followed part of the fourth section, or may be performed along a curved part of the fourth section, such that the fourth section substantially forms a U-shape and a subsequently-followed part of the fourth section is arranged adjacent to a previously-followed part of the fourth section within the k^{th} layer. In other words, when the fourth section is viewed in the k^{th} layer (a plane perpendicular to the vertical direction), the movement direction may be turned by 180 degrees. The magnitude of the fourth movement speed is higher than the magnitude of the first movement speed or the fourth discharge rate is lower than the first discharge rate. Specifically, the magnitude of the fourth movement speed may be twice the magnitude of the first movement speed or the fourth discharge rate may be half the first discharge rate.

Accordingly, the fourth segment, in which the movement direction is reversed, can be manufactured as an end portion of the three-dimensional object, such that an end portion of a stiffener portion can be manufactured on the three-dimensional object without stopping the discharging. Specifically, since the magnitude of the fourth movement speed is higher than the magnitude of the first movement speed, the first material is not excessively discharged in an area of the fourth section, where the movement direction is reversed. The same effect is achieved when the fourth discharge rate is lower than the first discharge rate.

Preferably, the additive manufacturing method further comprises a fifth discharging step of moving the nozzle by the moving mechanism with a fifth movement speed in a fifth section of the target trajectory within the k^{th} layer, while discharging a fifth segment of the first material with a fifth discharge rate from the nozzle. The fifth section is continuous to the fourth section along the target trajectory, such that the fifth discharging step is executed after the fourth discharging step. The fifth section intersects the second section. The magnitude of the fifth movement speed is equal to the magnitude of the third movement speed or the fifth discharge rate is equal to the third discharge rate.

Accordingly, by intersecting the second section with the fifth section, the structure of the three-dimensional object can be further reinforced. Specifically, by setting the magnitude of the fifth movement speed equal to the magnitude of the third movement speed or setting the fifth discharge rate equal to the third discharge rate, a vertical height of the fifth segment can be made equal to a vertical height of the third segment.

Preferably, in the additive manufacturing method, at least a part of second section overlaps with at least a part of the third section and at least a part of the fifth section at the intersection portion when viewed in a manufacturing direction (the vertical direction). Therein, the first discharge rate, the second discharge rate, and the third discharge rate are equal, and a sum obtained by adding the reciprocal of the magnitude of the second movement speed, the reciprocal of the magnitude of the third movement speed, and the reciprocal of the magnitude of the fifth movement speed is equal to the reciprocal of the magnitude of the first movement speed. Thereby, a sum obtained by adding a vertical height of the second segment, a vertical height of the third segment, and a vertical height of the fifth segment at the intersection portion is equal to a vertical height of the first segment.

Accordingly, a plurality of sections can intersect at the intersection portion within the same layer, without discharging an excessive amount of the first material at the intersection portion. Specifically, the discharging of the excessive amount of the first material at the intersection portion is prevented by setting the magnitudes of the movement speeds appropriately, while keeping the discharge rates constant. Thereby, the vertical height at the intersection portion corresponds to the vertical height outside the intersection portion, such that the same vertical height is achieved within a respective layer. Thus, structural inaccuracies are prevented. Furthermore, the intersection portion can be manufactured even with a first material, whose discharge characteristics prevent the discharging from the nozzle to be easily and precisely changed.

Preferably, the additive manufacturing method further comprises a sixth discharging step of moving the nozzle by the moving mechanism with a sixth movement speed in a sixth section of the target trajectory, while discharging a sixth segment of the first material with a sixth discharge rate from the nozzle. The sixth section is spaced apart from the first section such that the sixth segment and the first segment form a hollow portion therebetween within the k^{th} layer. Therein, the first segment may form part of a first wall of the three-dimensional object and the sixth segment may form part of a second wall of the three-dimensional object. The hollow portion is a portion where the first material is not present. Ends of the sixth segment and the first segment may be connected so as to form a closed loop around the hollow portion. Alternatively, other segments may be interposed between the sixth segment and the first segment so as to form a closed loop around the hollow portion. The hollow portion may be present in several of the multiple vertically consecutive layers. Furthermore, a plurality of hollow portions may be formed within the k^{th} layer, and the plurality of hollow portions may be separated from each other by respective segments.

Accordingly, a three-dimensional object having the first wall formed by the first segment and the second wall formed by the sixth segment can be manufactured with the hollow portion therebetween. This allows to quickly and efficiently manufacture a relatively lightweight, yet stable structure from the first material.

Preferably, the additive manufacturing method further comprises a seventh discharging step of moving the nozzle by the moving mechanism with a seventh movement speed in a seventh section of the target trajectory within the k+1^{th} layer, while discharging a seventh segment of the first material with a seventh discharge rate from the nozzle, such that at least a part of the seventh segment overlaps with at least a part of the first segment when viewed in the manufacturing direction (the vertical direction). A magnitude of the seventh movement speed is equal to the magnitude of the first movement speed and/or the seventh discharge rate is equal to the first discharge rate.

Accordingly, the seventh segment can be formed so as to overlap with at least a part of the first segment, thereby increasing a vertical height of the first wall surrounding the hollow portion. Thereby, the structure can be reinforced.

Preferably, in the additive manufacturing method, the first material is liquid curable concrete. The liquid curable concrete cures over time by concrete hydration, after being discharged from the nozzle, obtaining a certain rigidity and thereby forming the three-dimensional object.

Accordingly, an efficient and precise additive manufacturing method for liquid concrete is provided. Specifically, even if the liquid concrete may prevent the discharging from the nozzle to be easily and precisely changed, an appropriate additive manufacturing method is provided for liquid concrete, and the three-dimensional object can be manufactured efficiently.

The above object is further solved by an additive manufacturing system according to claim 11, and a three-dimensional object obtained by executing the additive manufacturing method. The additive manufacturing system is configured to execute the steps of the above additive manufacturing method. The three-dimensional object is a product obtained from the steps of the above additive manufacturing method.

### Brief description of drawings

The aspects of the disclosure may be best understood from the following detailed description taken in conjunction with the accompanying figures. The figures are schematic and simplified for clarity, and they just show details to improve the understanding of the claims, while other details are left out. The individual features of each aspect may each be combined with any or all features of the other aspects. These and other aspects, features and/or technical effect will be apparent from and elucidated with reference to the illustrations described hereinafter, in which:
Fig. 1 is a perspective view of a part of a target trajectory, along which a nozzle of an additive manufacturing system is moved to manufacture a three-dimensional object according to a first embodiment;
Fig. 2 is a plan view of a k^{th} layer of the three-dimensional object according to the first embodiment;
Fig. 3 is a diagram showing multiple segments of the three-dimensional object that are discharged over the course of time;
Fig. 4a is a perspective view of a part of the three-dimensional object manufactured by moving the nozzle of the additive manufacturing system along a part of the target trajectory;
Fig. 4b is a perspective view of the part of the target trajectory, along which the nozzle of the additive manufacturing system is moved to manufacture the part of the three-dimensional object shown in Fig. 4a;
Fig. 5 is a flowchart illustrating the additive manufacturing method according to the first embodiment; and
Fig. 6 is a plan view of a k^{th} layer of the three-dimensional object according to a second embodiment.

### Detailed description

The detailed description set forth below in connection with the appended drawings is intended as a description of various configurations. The detailed description includes specific details for the purpose of providing a thorough understanding of various concepts. However, it will be apparent to those skilled in the art that these concepts may be practised without these specific details.

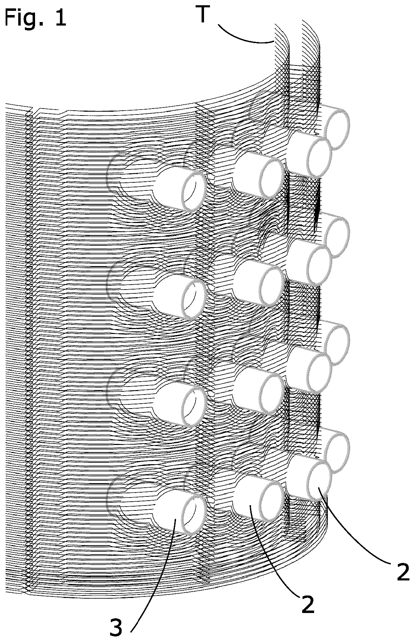

Fig. 1 is a perspective view of a part of a target trajectory T, along which a nozzle of an additive manufacturing system is moved to manufacture a three-dimensional object according to an embodiment.

In the embodiment, the three-dimensional object is a draw pit. The draw pit is designed to accommodate electrical cabling, wiring boxes, water and/or sewage piping, valves, connectors and the like, and to provide easy access thereto in order to facilitate the ducting, initial installation, maintenance and monitoring thereof. In the embodiment, the draw pit is manufactured from concrete (the first material).

In the embodiment, the draw pit has a side wall having a substantially cylindrical shape, and an upper access opening provided on an upper side of the draw pit. However, draw pits having shapes other than the cylindrical shape, such as a parallelepiped shape or a cubical shape, may be manufactured.

The draw pit further comprises a plurality of side openings, through which the electrical cabling, water and/or sewage piping or the like can be guided so as to lead from an inside of the draw pit through the side wall to an outside of the draw pit. In the embodiment, the side openings of the draw pit are provided by a second passage forming object 2 and a third passage forming object 3, as shown in Fig. 1. In the embodiment, the second passage forming object 2 and the third passage forming object 3 are cylindrical pipes penetrating the side wall of the draw pit.

In the embodiment, the draw pit is manufactured by executing an additive manufacturing method with an additive manufacturing system.

The additive manufacturing system (not shown) comprises a base for supporting the draw pit thereon, a nozzle for discharging the liquid concrete, an industrial robot configured to cause a relative movement between the base and the nozzle, and a controller configured to control the industrial robot.

When the industrial robot causes the relative movement between the base and the nozzle, the nozzle follows the target trajectory T, also referred to as a toolpath. Fig. 1 shows a part of the target trajectory T, which represents half of the cylindrical side wall of the draw pit. As shown in Fig. 1, the target trajectory T includes a plurality of sections that are located in multiple vertically consecutive layers.

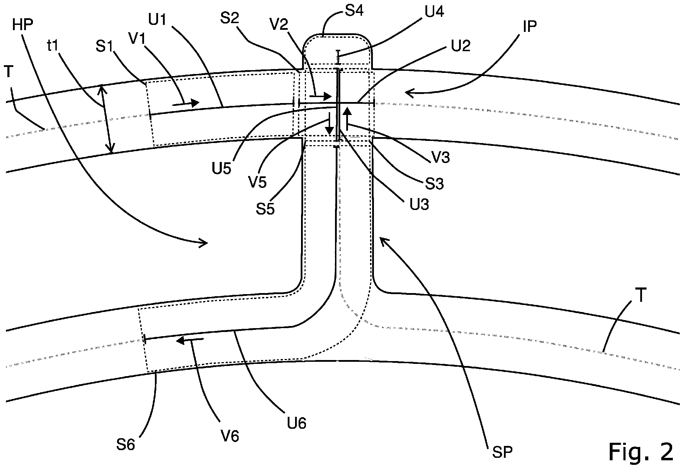

Fig. 2 is a plan view of a part of a k^{th} layer of the target trajectory T for manufacturing the draw pit according to the first embodiment. Specifically, Fig. 2 shows two arc portions, which are arranged concentrically around a center (cylinder axis of the draw pit) of the draw pit on different diameters, and a stiffener portion SP, which connects the two arc portions. The two arc portions and the stiffener portion SP together form a part of the side wall of the draw pit.

A first of the two arc portions, which has a larger diameter around the center and corresponds to the upper of the two arc portions shown in Fig. 2, represents a part of an outer side wall OSW of the draw pit. The second of the two arc portions, which has a smaller diameter around the center and corresponds to the lower of the two arc portions shown in Fig. 2, represents a part of an inner side wall ISW of the draw pit. In other words, the side wall of the draw pit has a double-wall structure comprising the inner side wall ISW and the outer side wall OSW. The stiffener portion SP connects the inner side wall ISW and the outer side wall OSW.

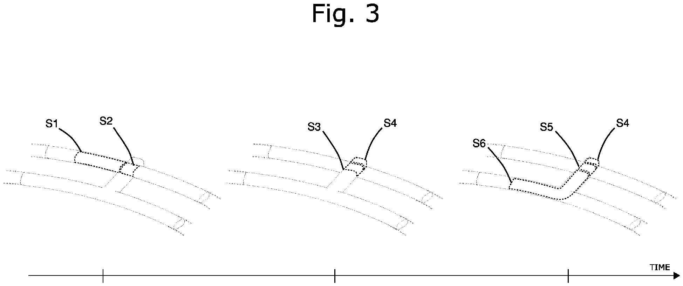

Fig. 3 is a diagram showing multiple segments S1 to S6 of the draw pit that are discharged over the course of time, thereby illustrating the arrangement shown in Fig. 2.

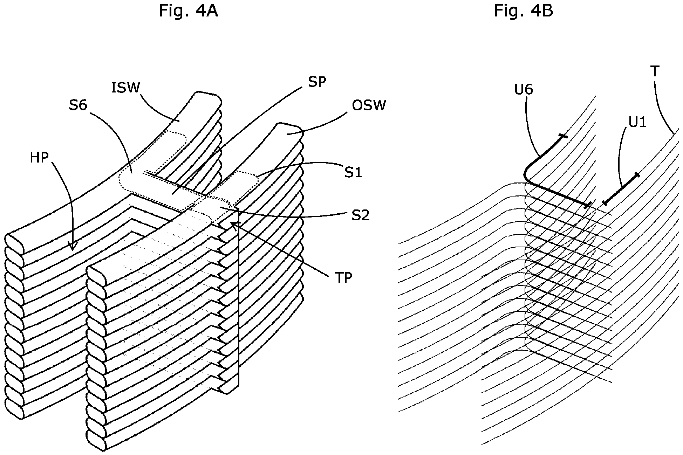

Fig. 4a is a perspective view of a part of the draw pit, which shows the spatial arrangement of the inner side wall ISW, the outer side wall OSW, and the stiffener portion SP of the draw pit.

Fig. 4b is a perspective view of the part of the target trajectory, along which the nozzle of the additive manufacturing system is moved to manufacture the part of the draw pit shown in Fig. 4a;

As shown in Figs. 2 and 4b, a part of the outer side wall OSW is manufactured by moving the nozzle by the industrial robot along the target trajectory T with a first movement speed V1 in a first section U1 of the target trajectory T within the k^{th} layer, while discharging a first segment S1 of the liquid concrete with a first discharge rate from the nozzle. Specifically, a perspective view of the first segment S1 is shown in Figs. 3 and 4a.

As shown in Fig. 2, the first segment S1 has a thickness t1 in a direction perpendicular to the target trajectory and within the k^{th} layer, and a length along the first section U1 of target trajectory T.

The nozzle is then moved by the industrial robot with a second movement speed V2 in a second section U2 of the target trajectory T within the k^{th} layer, while discharging a second segment S2 of the liquid concrete with a second discharge rate from the nozzle. As shown in Fig. 2, the second section U2 is a section of the target trajectory T, which is intersected by another section of the target trajectory T, namely a third section U3 of the target trajectory T. In the embodiment, the second movement speed V2 is higher than the first movement speed V1, and the second discharge rate is equal to the first discharge rate.

Subsequently, the nozzle is moved further along the target trajectory T so as to form a subsequent part of the outer side wall OSW. Having completed the forming of the part of the outer side wall OSW, the nozzle is moved by the industrial robot to form the inner side wall ISW of the draw pit and to form the stiffener portion SP.

Upon forming the stiffener portion SP, the target trajectory T intersects itself, namely the third section U3 of the target trajectory T intersects the second section U2 of the target trajectory T within the k^{th} layer, as shown in Fig. 2. In the third section U3, the nozzle is moved by the industrial robot with a third movement speed V3 within the k^{th} layer, while discharging a third segment S3 of the liquid concrete with a third discharge rate from the nozzle. In the embodiment, the third movement speed V3 is higher than the first movement speed V1 and equal to the second movement speed V2, and the third discharge rate is equal to the first discharge rate.

The nozzle is then moved by the industrial robot with a fourth movement speed in a fourth section U4 of the target trajectory T within the k^{th} layer, wherein the fourth section U4 is continuous to the third section U3 along the target trajectory T and a movement direction of the nozzle is reversed in the fourth section U4, while discharging a fourth segment S4 of the liquid concrete with a fourth discharge rate from the nozzle. As shown in Fig. 2, the reversing of the movement direction is performed in one reversing point, which is a point that has a largest distance from the center of the draw pit, such that a subsequently-followed part of the fourth section coincides and vertically overlaps with a previously-followed part of the fourth section. In the embodiment, the fourth movement speed V4 is higher than the first movement speed V1 and lower than the third movement speed V3, and the fourth discharge rate is equal to the first discharge rate.

The nozzle is then moved by the industrial robot with a fifth movement speed V5 in a fifth section U5 of the target trajectory T within the k^{th} layer, wherein the fifth section U5 is continuous to the fourth section U4 along the target trajectory T and intersects the second section U2, while discharging a fifth segment S5 of the liquid concrete with a fifth discharge rate from the nozzle. As shown in the plan view of Fig. 2, the fifth section U5 overlaps entirely with the third section U3. In the embodiment, the fifth movement speed V5 is higher than the first movement speed V1 and equal to the third movement speed V3, and the fifth discharge rate is equal to the first discharge rate.

The nozzle is then moved by the industrial robot with a sixth movement speed V6 in a sixth section U6 of the target trajectory T, while discharging a sixth segment S6 of the liquid concrete with a sixth discharge rate from the nozzle. As shown in Fig. 2, the sixth section U6 is spaced apart from the first section U1 such that the sixth segment S6 and the first segment S1 form a hollow portion HP therebetween within the k^{th} layer. Specifically, the first segment S1 forms a part of the outer side wall OSW of the draw pit and a part of the sixth segment S6 forms a part of the inner side wall ISW of the draw pit with the hollow portion HP arranged therebetween.

Subsequently, the nozzle is moved further along the target trajectory T so as to form a subsequent part of the inner side wall ISW. Having completed the forming of the part of the inner side wall ISW, the additive manufacturing moves on to the next layer, that is, a k+1^{th} layer of the draw pit.

The nozzle is then moved by the industrial robot with a seventh movement speed V7 in a seventh section U7 of the target trajectory T within the k+1^{th} layer, while discharging a seventh segment S7 of the liquid concrete with a seventh discharge rate from the nozzle, such that at least a part of the seventh segment S7 overlaps with at least a part of the first segment S1 when viewed in the vertical direction. In the embodiment, the seventh segment S7 forms a part of the outer side wall OSW of the draw pit. In the embodiment, the seventh movement speed V7 is equal to the first movement speed V1, and the seventh discharge rate is equal to the first discharge rate.

Subsequently, the nozzle is moved further along the target trajectory T so as to form subsequent parts of the outer side wall OSW and the inner side wall ISW. Then, the manufacturing moves on to the next layers of the multiple vertically consecutive layers so as to complete the discharging of the liquid concrete. While moving through the multiple vertically consecutive layers, the second passage forming object 2 and the third passage forming object 3 are placed at respective layers, as shown in Fig. 1.

Then, after completing the discharging of the liquid concrete from the nozzle, the liquid concrete is cured by concrete hydration. Thereby, the segments harden.

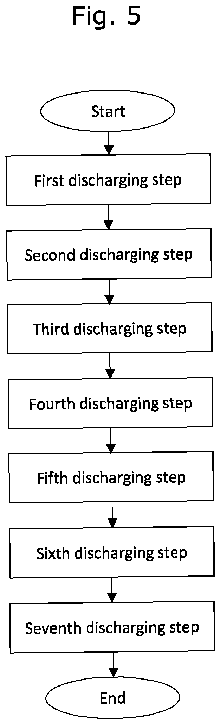

The above steps for manufacturing the draw pit are also shown in the flow chart of Fig. 5.

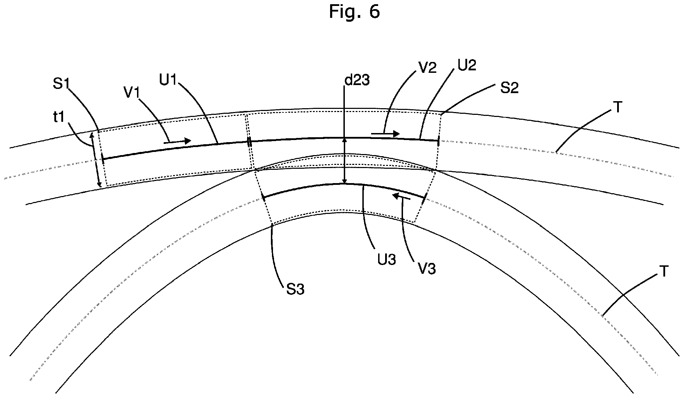

Fig. 6 is a plan view of a k^{th} layer of a draw pit according to a second embodiment. The basic structure of the draw pit of the second embodiment is the same as that of the draw pit of the first embodiment, except that the stiffener portion SP is formed without the second section U2 and the third section U3 intersecting each other. Instead, in the second embodiment, the stiffener portion SP is formed by arranging the third section U3 close to the second section U2 with a smallest distance d23 therebetween that is greater than zero. For the sake of brevity, in the second embodiment, only the structure around the stiffener portion SP is described and the detailed description of the other parts of the draw pit and its manufacturing is applied from the first embodiment.

Fig. 6 shows a first section U1, a second section U2, and a third section U3 of the target trajectory T.

As shown in Fig. 6, the second section U2 is a section of the target trajectory T, which is close to a third section U3 of the target trajectory T. In the embodiment, a second segment S2 discharged from the nozzle in the second section U2 forms a part of the outer side wall OSW of the draw pit, and a third segment S3 discharged from the nozzle in the third section U3 forms a part of the inner side wall ISW of the draw pit. Specifically, the shortest distance d23 between the second section U2 and the third section U3 within the k^{th} layer is less than a thickness t1 of the first segment S1, as shown in Fig. 6.

Subsequently, the nozzle is moved further along the target trajectory T so as to form subsequent parts of the draw pit, thereby completing the draw pit according to the second embodiment.

The particular features, structures or characteristics described in the embodiment do not all have to be present in the additive manufacturing system and the additive manufacturing method, and particular features may be omitted. The previous description is provided to enable any person skilled in the art to practice the various aspects described herein. Various modifications to the embodiment will be readily apparent to those skilled in the art, and the generic principles defined herein may be applied to other aspects.

## Claims

1. An additive manufacturing method for controlling an additive manufacturing system for manufacturing a three-dimensional object from a curable first material according to a three-dimensional data model,
the additive manufacturing system comprising:
a base for supporting the three-dimensional object thereon;
a nozzle for discharging the first material; and
a moving mechanism configured to cause a relative movement between the base and the nozzle, such that the nozzle follows a target trajectory (T), while discharging a plurality of segments (S1 to S7) of the first material from the nozzle, thereby manufacturing the three-dimensional object in multiple vertically consecutive layers,
the method comprising:
a first discharging step of moving the nozzle by the moving mechanism with a first movement speed (V1) in a first section (U1) of the target trajectory (T) within a k^{th} layer of the multiple vertically consecutive layers, while discharging a first segment (S1) of the first material with a first discharge rate from the nozzle;
a second discharging step of moving the nozzle by the moving mechanism with a second movement speed (V2) in a second section (U2) of the target trajectory (T) within the k^{th} layer, wherein the second section (U2) is continuous to the first section (U1) along the target trajectory (T), while discharging a second segment (S2) of the first material with a second discharge rate from the nozzle; and
a third discharging step of moving the nozzle by the moving mechanism with a third movement speed (V3) in a third section (U3) of the target trajectory (T) within the k^{th} layer, while discharging a third segment (S3) of the first material with a third discharge rate from the nozzle, wherein
in the first discharging step, the first movement speed (V1) and/or the first discharge rate is set such that the first segment (S1) has a thickness (t1) in a direction perpendicular to the target trajectory (T) and within the k^{th} layer,
in the third discharging step, the nozzle is moved such that the third section (U3) is close to the second section (U2) and a shortest distance (d23) between the second section (U2) and the third section (U3) within the k^{th} layer is less than the thickness (t1) of the first segment (S1), and
at least one of a magnitude of the second movement speed (V2) and a magnitude of the third movement speed (V3) is higher than a magnitude of the first movement speed (V1) and/or at least one of the second discharge rate and the third discharge rate is lower than the first discharge rate.

2. The additive manufacturing method according to claim 1, wherein
each of the first discharge rate, the second discharge rate, and the third discharge rate is greater than zero, and
each of the magnitude of the first movement speed (V1), the magnitude of the second movement speed (V2), and the magnitude of the third movement speed (V3) is greater than zero.

3. The additive manufacturing method according to claim 1 or 2, wherein
the third section (U3) intersects the second section (U2) such that the shortest distance (d23) between the second section (U2) and the third section (U3) is zero, thereby forming an intersection portion (IP) between the second segment (S2) and the third segment (S3) within the k^{th} layer.

4. The additive manufacturing method according to any one of claims 1 to 3, further comprising:
a fourth discharging step of moving the nozzle by the moving mechanism with a fourth movement speed in a fourth section (U4) of the target trajectory (T) within the k^{th} layer, wherein the fourth section (U4) is continuous to the third section (U3) along the target trajectory (T) and a movement direction of the nozzle is reversed in the fourth section (U4), while discharging a fourth segment (S4) of the first material with a fourth discharge rate from the nozzle, wherein
the magnitude of the fourth movement speed (V4) is higher than the magnitude of the first movement speed (V1) or the fourth discharge rate is lower than the first discharge rate.

5. The additive manufacturing method according to claim 4, further comprising:
a fifth discharging step of moving the nozzle by the moving mechanism with a fifth movement speed (V5) in a fifth section (U5) of the target trajectory (T) within the k^{th} layer, wherein the fifth section (U5) is continuous to the fourth section (U4) along the target trajectory (T) and intersects the second section (U2), while discharging a fifth segment (S5) of the first material with a fifth discharge rate from the nozzle, wherein
the magnitude of the fifth movement speed (V5) is equal to the magnitude of the third movement speed (V3) or the fifth discharge rate is equal to the third discharge rate.

6. The additive manufacturing method according to claim 5, wherein
at least a part of second section (U2) overlaps with at least a part of the third section (U3) and at least a part of the fifth section (U5) at the intersection portion (IP) when viewed in a manufacturing direction,
the first discharge rate, the second discharge rate, and the third discharge rate are equal, and
a sum obtained by adding the reciprocal of the magnitude of the second movement speed (V2), the reciprocal of the magnitude of the third movement speed (V3), and the reciprocal of the magnitude of the fifth movement speed (V5) is equal to the reciprocal of the magnitude of the first movement speed (V1) such that a sum obtained by adding a vertical height of the second segment (S2), a vertical height of the third segment (S3), and a vertical height of the fifth segment (S5) at the intersection portion (IP) is equal to a vertical height of the first segment (S1).

7. The additive manufacturing method according to any one of claims 1 to 6, further comprising:
a sixth discharging step of moving the nozzle by the moving mechanism with a sixth movement speed (V6) in a sixth section (U6) of the target trajectory (T), while discharging a sixth segment (S6) of the first material with a sixth discharge rate from the nozzle, wherein the sixth section (U6) is spaced apart from the first section (U1) such that the sixth segment (S6) and the first segment (S1) form a hollow portion (HP) therebetween within the k^{th} layer.

8. The additive manufacturing method according to claim 7, further comprising:
a seventh discharging step of moving the nozzle by the moving mechanism with a seventh movement speed (V7) in a seventh section (U7) of the target trajectory (T) within the k+1^{th} layer, while discharging a seventh segment (S7) of the first material with a seventh discharge rate from the nozzle, such that at least a part of the seventh segment (S7) overlaps with at least a part of the first segment (S1) when viewed in the manufacturing direction, wherein
a magnitude of the seventh movement speed is equal to the magnitude of the first movement speed (V1) and/or the seventh discharge rate is equal to the first discharge rate.

9. The additive manufacturing method according to any one of claims 1 to 8, wherein the first material is liquid curable concrete.

10. An additive manufacturing system for manufacturing a three-dimensional object from at least a first material according to a three-dimensional data model,
the additive manufacturing system comprising
a base for supporting the three-dimensional object thereon;
a nozzle for discharging the first material;
a moving mechanism configured to cause a relative movement between the base and the nozzle, such that the nozzle follows a target trajectory (T), while discharging a plurality of segments (S1 to S7) of the first material from the nozzle, thereby manufacturing the three-dimensional object in multiple vertically consecutive layers; and
a controller configured to control the moving mechanism, wherein
the controller is configured to execute the additive manufacturing method according to any one of claims 1 to 9.

11. A three-dimensional object obtained by executing the additive manufacturing method according to any one of claims 1 to 9.
